# EUROPÄISCHE PATENTSCHRIFT

(11) **EP 0 885 085 B1**
(45) Veröffentlichungstag und Bekanntmachung des Hinweises auf die Patenterteilung: **15.01.2003**
(21) Anmeldenummer: 97903200.0
(22) Anmeldetag: 03.03.1997
(51) Int. Cl.: B23K 11/06

(54) **INNENSEITIGER SCHWEISSNAHTSCHUTZ VON BLECHROHREN**
INTERNAL WELD PROTECTION OF SHEET METAL PIPES
PROTECTION INTERIEURE DE LA SOUDURE DE TUYAUX EN TOLE

(30) Priorität: 06.03.1996 CH 58796
(43) Veröffentlichungstag der Anmeldung: 23.12.1998
(73) Patentinhaber: Frey, Ernst M., CH-3655 Sigriswil (CH)
(72) Erfinder: Frey, Ernst M., CH-3655 Sigriswil (CH)
(74) Vertreter: Patentanwälte Breiter + Wiedmer AG
(86) Internationale Anmeldenummer: CH9700082
(87) Internationale Veröffentlichungsnummer: WO97032685

(56) Entgegenhaltungen:
- EP-A- 0 548 011
- EP-A- 0 591 107
- DE-C- 3 127 881
- US-A- 3 077 171
- US-A- 3 733 670
- PATENT ABSTRACTS OF JAPAN vol. 008, no. 189 (M-321), 30.August 1984 & JP 59 078786 A (TOYOTA JIDOSHA KK), 7.Mai 1984,

## Beschreibung

Die Erfindung bezieht sich auf ein Verfahren zum Auftragen eines kontinuierlichen Schutzfilms aus einem thermoplastischen Kunststoff auf die Innenseite der Längsschweissnaht von Blechrohren, welche stirnseitig aneinanderliegend über den Schweissarm einer Schweissmaschine und einen anschliessenden Auftragsarm geführt werden, wobei der thermoplastische Kunststoff kontinuierlich geschmolzen und mittels einer Auftragsdüse wenigstens über die ganze Breite der Innenschweissnaht aufgetragen wird. Weiter betrifft die Erfindung eine Vorrichtung zur Durchführung des Verfahrens.

Es sind Schweissmaschinen bekannt, welche ein "in-line" angebautes Auftragssystem für einen thermoplastischen Kunststoff haben, das einen Schutzfilm auf die Längsschweissnaht von Blechrohren, insbesondere von längsgeschweissten Büchsen- und Dosenmänteln, aufbringt. Grundsätzlich wird dabei zwischen dem Aufbringen eines Lacks und eines Pulvers unterschieden, welche an Ort und Stelle zu einer Naht abdeckenden Schicht verarbeitet werden.

Das Aufbringen eines Schutzfilms erfolgt, je nach Maschinentyp, oben oder unten, wobei das zu behandelnde Blechrohr beim Aufbringen des Schutzfilms im oberen Bereich an einem Auftragsarm hängend, beim Aufbringen im unteren Bereich dagegen auf einem Transportband stehend, in Längsrichtung des Auftragsarms transportiert wird.

Insbesondere für in der Lebensmittelindustrie verwendete Weissblechdosen ist eine saubere, sterilisationsfeste Innenabdeckung der Schweissnaht mit einem ununterbrochenen Schutzfilm von grösster Bedeutung. Die Lebensmittelechtheit bedingt weiter, dass die Schutzschicht auch harten mechanischen Bearbeitungen, wie dem Anbringen von Sicken oder dem Bördeln, standhält. Das Aufbringen von sterilisationsfesten "Hotmelts", wie thermoplastische Kleber aus Kunststoff kurz genannt werden, ist bisher auch daran gescheitert, dass sie nicht mit den Verhältnissen angepassten technischen Mitteln aufgebracht werden konnten und den genannten mechanischen Beanspruchungen nicht standhielten.

Die EP, A1 0591107 beschreibt ein Verfahren zum kontinuierlichen Auftragen von Schutzschichten zum Abdecken einer Längsschweissnaht von Blechrohren. Eine Hotmelt-Masse wird als flexibler Hotmelt-Faden kontinuierlich durch den Schweissarm einer Schweissmaschine geführt und in Richtung der Innenseite der Längsschweissnaht der Blechrohre umgelenkt. Von einer Auftragseinrichtung wird der Hotmelt-Faden auf ein Blechrohr gedrückt, geschmolzen und homogen über die Breite der Längsschweissnaht verteilt. Gleichzeitig mit der inneren kann auch eine äussere Schutzschicht auf die Längsschweissnaht aufgetragen werden, was eine Eliminierung von Brenn- oder Trocknungsöfen erlaubt. Obwohl Schweiss- und Auftragsarm mit der Beschichtungseinrichtung unmittelbar hintereinander liegen und die Längsschweissnaht der durchlaufenden Blechrohre beim Auftragskopf noch sehr heiss sind, hat die industrielle Praxis gezeigt, dass das Schmelzen des Hotmelt-Fadens auf der Längsschweissnaht problematisch bleibt und nicht in befriedigende Resultate umgesetzt werden kann.

Der Erfinder hat sich die Aufgabe gestellt, ein Verfahren und eine Vorrichtung der einleitend beschriebenen Gattung zu schaffen, welche im industriellen Betrieb ein problemloses, wirtschaftliches Auftragen des kontinuierlichen Schutzfilms auf der inneren Längsschweissnaht gewährleisten. Insbesondere soll der kontinuierliche Schutzfilm auch bei im Bereich der Schweissnaht schwankender Krümmung von aufeinanderfolgenden Rohrkörpern in bezug auf Dicke und Form konstant bleiben. Der Schutzfilm soll über die Breite einstellbar dick ausgebildet werden können.

Bezüglich des Verfahrens wird die Aufgabe erfindungsgemäss dadurch gelöst, dass der kontinuierlich zugeführte thermoplastische Kunststoff im Bereich des Auftragarms vorgewärmt, geschmolzen und unter homogener Verflüssigung zur Auftragsdüse geleitet, deren Düsenöffnung mit einstellbarem, konstantem Abstand der Innenseite der Längsschweissnaht der Blechrohre nachgeführt, und der flüssige Kunststoff dosiert aufgetragen wird. Spezielle und weiterbildende Ausführungsformen des Verfahrens sind Gegenstand von abhängigen Patentansprüchen.

Vorzugsweise wird ein 10 bis 150 µm, insbesondere 20 bis 50 µm dicker Schutzfilm aufgetragen, welcher je nach der Ausbildung der Schweissnaht zweckmässig 3 bis 30 mm breit ist. Je nach Ausgestaltung der Düsenöffnung ist die Dicke des Schutzfilms über die ganze Breite konstant oder in der Mitte, wo in der Regel ein erhöhter Schutz erwünscht ist, etwas dicker aufgetragen. Für die Ausgestaltung der Düsenöffnung wird auf spätere Ausführungen verwiesen.

Als thermoplastischer Kunststoff, auch "Hotmelt" bezeichnet, eignen sich in erster Linie Polyester, welche verhältnismässig teuer, jedoch widerstandsfähig und vor allem lebensmittelecht sind. Für nicht lebensmittelechte Industriedosen können auch Polyurethane oder in speziellen Fällen sogar aushärtbare Epoxyharze verwendet werden.

Nach einer ersten Ausführungsform wird der thermoplastische Kunststoff in Form eines Fadens durch den Schweissarm in den Auftragsarm geführt, vorerst in einer Vorwärmzone auf eine Temperatur von vorzugsweise etwa der Hälfte der Schmelztemperatur vorgewärmt und dann in eine Verflüssigungszone mit einem in gleicher Richtung verlaufenden Kanal eingeleitet und dort geschmolzen. Der in diesen Kanal gestossene Faden ist vorerst fest und schmilzt beim Nachstossen kontinuierlich. Der geschmolzene Kunststoff fliesst vorzugsweise entlang des eingestossenen Fadens zurück und kann in einen weiteren, zur Auftragsdüse führenden Kanal umgeleitet werden. Kanal und Düsenaustrittsöffnung sind vorzugsweise so dimensioniert und auf den Vorschub des Kunststoffadens abgestimmt, dass der geschmolzene Kunststoff dosierbar ausfliesst, aber sich in der Schmelzapparatur kein Druck aufbauen kann.

Der Begriff "Kunststoff-Faden" bzw. "Hotmelt-Faden" umfasst auch Drähte, Schnüre und dgl. im Vergleich zum Querschnitt lange Massen.

Die Vorwärmzone bringt u.a. den Vorteil, dass beim Abstellen keine Wärme zurückfliessen und den Kunststoffaden ausserhalb der Apparatur schmelzen kann.

In einer Vorheizzone wird der Kunststoffaden beispielsweise auf 140 bis 160°C erwärmt und durch eine abgedichtete Oeffnung in den Kanal der Verflüssigungszone gestossen, wo die Temperatur materialabhängig auf einen Bereich von beispielsweise etwa 220 bis 280°C erhöht ist.

Beim Einschalten der Schmelzapparatur bleibt die Vorheizzone zweckmässig vorerst kalt, diese wird erst etwa 10 min nach der Heizpatrone zum Verflüssigen eingeschaltet.

Nach weiteren Varianten kann der thermoplastische Kunststoff nicht nur in Fadenform, sondern auch in anderer geeigneter Form zugegeben, beispielsweise in Granulatform oder Kerzenform gemäss der EP,A1 0548 011 (und das als nächstliegender Stand der Technik angesehen wird), geschmolzen und homogen verflüssigt zur Auftragsdüse geleitet werden.

Je nach dem Material des aufgetragenen Schutzfilms können die Blechrohre mit der innenbeschichteten Schweissnaht noch in-line durch eine Wärmezone geführt werden. Dadurch wird der aufgetragene Schutzfilm weiter homogenisiert. Dies ist insbesondere notwendig, wenn ein verhältnismässig schwer schmelzbarer Epoxyharz eingesetzt wird, hier ist eine längere Wärmezone als üblich notwendig.

In bezug auf die Vorrichtung zur Durchführung des Verfahrens wird die Aufgabe erfindungsgemäss dadurch gelöst, dass eine Schmelzeinrichtung Mittel zum Nachführen der Austrittsöffnung der Auftragsdüse in einem einstellbaren, regelmässigen Abstand von der Innenseite der Schweissnaht aufweist. Spezielle und weiterbildende Ausführungsformen der Vorrichtung sind Gegenstand von abhängigen Patentansprüchen.

Die Mittel zum Nachführen der Austrittsöffnung der Auftragsdüse in konstantem Abstand sind vielfältig:
- Eine Nachlaufrolle und eine Auftragsdüse sind auf einem schwenkbaren Arm montiert. Die Nachlaufrolle rollt auf der durchlaufenden Innenseite der Schweissnaht der Blechrohre. Der vorhergehende Schweissvorgang hat zur Folge, dass die Blechrohre im Bereich der Längsschweissnaht verschieden stark gekrümmt sind. Erfindungsgemäss läuft nun die Nachlaufrolle stets auf der Schweissnaht, auch bei verschiedener Krümmung der Blechrohre ist der aufgetragene Schutzfilm immer exakt gleich dick.
   Der gemeinsame Schwenkarm von Nachlaufrolle und Auftragsdüse kann die gesamte Schmelzapparatur, aber auch nur einen Teil davon, umfassen.
- Die Nachlaufrolle und die Auftragsdüse können auf einem vertikal zur Verschiebungsrichtung der Blechrohre in der Schmelzapparatur verschiebbaren Schlitten montiert sein, welcher seinerseits die Nachlaufrolle auf die Innenseite der Schweissnaht der Blechrohre drückt. Auch hier überragt die Nachlaufrolle die Auftragsdüse um einen einstellbaren Abstand.
- In beiden vorstehenden Varianten kann die Nachlaufrolle durch einen Gleitschuh ersetzt werden, welcher eine analoge Funktion erfüllt. Wesentlich ist hier wiederum, dass der Gleitschuh die Austrittsöffnung der Auftragsdüse um den einstellbaren Abstand überragt. Der Gleitschuh besteht beispielsweise aus einer Keramik mit einem niedrigen Reibungskoeffizienten und hoher Abriebfestigkeit.
- Ein als Nachlaufrolle oder Gleitschuh ausgebildeter Abstandhalter wird vorzugsweise mit Federkraft auf die Innenseite der Schweissnaht gedrückt oder gezogen. Es sind jedoch auch andere, an sich bekannte Mittel anwendbar, z.B. pneumatische oder magnetische.
- Die Distanz zur Innenseite der Schweissnaht kann statt mechanisch mit einer an sich bekannten Sonde laufend gemessen, elektronisch ausgewertet und durch elektrische Impulse an ein Stellorgan verändert werden, welches die Distanz der Austrittsöffnung der Auftragsdüse zur Innenseite der Schweissnaht einstellt. An sich bekannte, geeignete Sonden sind beispielsweise Wirbelstrom-, Ultraschall-, Laser-, kapazitiv oder induktiv arbeitende Sonden.

Die Vorheizung mit der Vorheizzone und die Schmelzeinrichtung mit der Verflüssigungszone sind bevorzugt unmittelbar nacheinander angeordnet.

Zusammenfassend kann nochmals betont werden, dass die vorliegende Erfindung mit einfachen Mitteln erlaubt, einen kontinuierlichen Schutzfilm aus einem thermoplastischen Kunststoff auf die Innenseite der Längsschweissnaht von Blechrohren aufzutragen, welcher unabhängig von beim Schweissen unweigerlich entstehenden Verformungen stets exakt gleich dick ist. Ein Abreissen des Films oder in Querrichtung verdickte Stellen sind nicht mehr möglich, was insbesondere bei lebensmittelechten Weissblechrohren von wesentlicher Bedeutung ist. Weiter wird das Schmelzen und homogene Verflüssigen des thermoplastischen Kunststoffs auf einfache und sichere Art vor dessen Eintritt in die Auftragsdüse gelöst.

Die Erfindung wird anhand von in der Zeichnung dargestellten Ausführungsbeispielen, welche auch Gegenstand von abhängigen Patentansprüchen sind, näher erläutert. Es zeigen schematisch
- Fig. 1 ein Uebersichtsschema des Bereichs des Schweissarms und des Auftragsarms mit Schmelzapparatur einer Schweissmaschine,
- Fig. 2 das Prinzip einer im Auftragsarm schwenkbaren Schmelzapparatur,
- Fig. 3 eine Schmelzapparatur mit einer Vorheiz- und Verflüssigungszone,
- Fig. 4 die Ausflussöffnung einer Auftragsdüse,
- Fig. 5 eine Auftragsdüse in Ansicht,
- Fig. 6 die Auftragsdüse gemäss Fig. 5 im Seitenschnitt,
- Fig. 7 einen teilweisen Querschnitt durch ein Blechrohr im Bereich der Längsschweissnaht, und
- Fig. 8 eine Vergrösserung des Bereichs A gemäss Fig. 7.

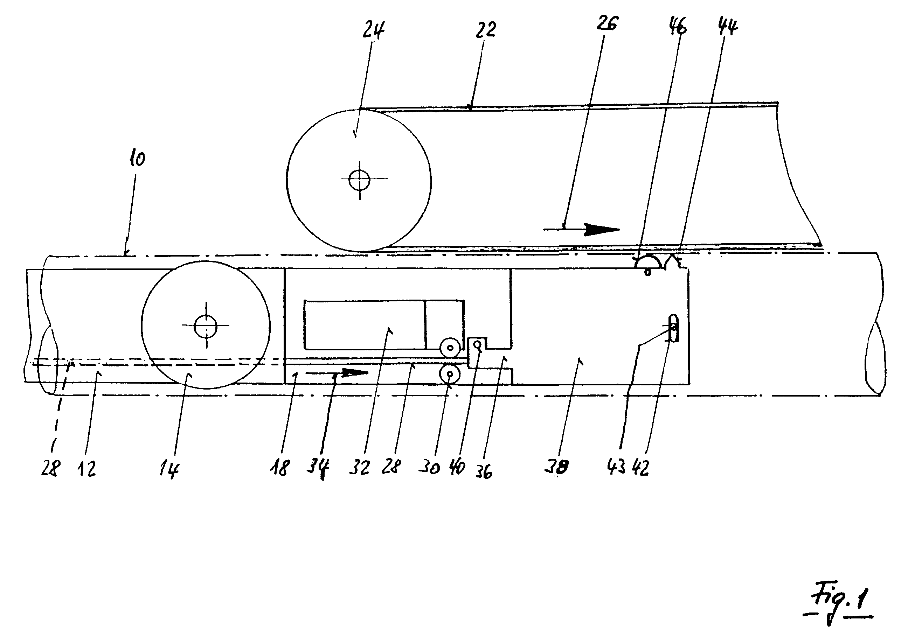

Von einer Schweissmaschine zur Herstellung von Blechrohren 10 ist in Fig. 1 lediglich der Schweissarm 12 mit der Schweissrolle 14 zur Bildung einer längslaufenden Schweissnaht 16 (Fig. 8) der Blechrohre 10 erkennbar. In coaxialer, aussenbündiger Verlängerung des Schweissarms 12 ist ein Auftragsarm 18 für einen Schutzfilm 20 (Fig. 8) an der Innenseite der Schweissnaht 16 vorgesehen.

Auf den Blechrohren 10, im vorliegenden Fall Stahlrohre, liegt ein endloses Transportband 22 auf, welches durch eine Umlenkrolle 24 gespannt und angetrieben ist. Die Blechrohre werden in Richtung des Pfeils 26 transportiert und durch eine anschliessende, nicht dargestellte Wärmezone geführt.

Ein im Bereich des Schweissarms 12 gestrichelt angedeuteter Hotmelt-Faden 28 läuft durch ein Rollenpaar 30, welches als Führung und Materialvorschub für den Faden 28 dient. Wenigstens eine der beiden Rollen 30 ist angetrieben, gemäss Fig. 1 die obere Rolle 30 mit einem Elektromotor 32. Der Faden mit einem Durchmesser im Bereich von etwa 2 bis 4 mm wird in der durch den Pfeil 34 angedeutenden Förderrichtung über eine Vorheizung 36 in eine Schmelzapparatur 38 gestossen. Die Schmelzapparatur 38 ist als ganzes um die Aufhängung 40 schwenkbar. Ein diese Schwenkbewegung begrenzendes Langloch 42 ist von einer Aufhängung 43 für die Schmelzapparatur 38 durchgriffen.

Am Geräterahmen der Schmelzapparatur 38 ist eine Auftragsdüse 44 zum Auftragen des Schutzfilms 20 (Fig. 8) und eine Nachlaufrolle 46 als Abstandshalter befestigt. Die Nachlaufrolle 46 überragt die Auftragsdüse 44 des Schutzfilms 20 (Fig. 8). Durch in Fig. 1 nicht erkennbare Mittel wird die Schmelzapparatur 38 über die Nachlaufrolle 46 angedrückt und der Abstand der Ausflussöffnung der Auftragsdüse 44 konstant gehalten.

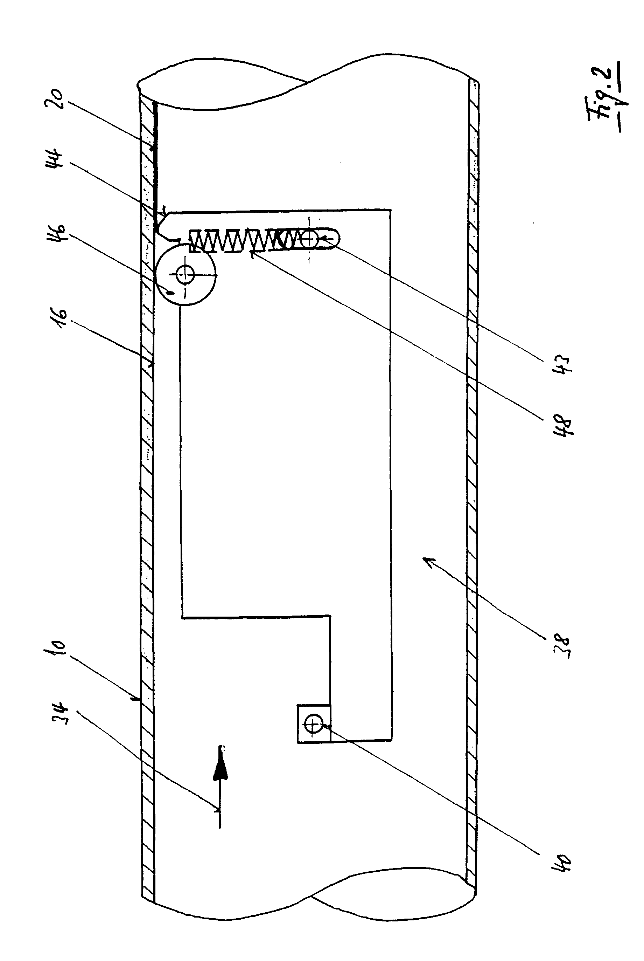

In Fig. 2 ist die schwenkbare Aufhängung der Schmelzapparatur 38 als ganzes dargestellt. Eine auf der Aufhängung 43 abgestützte Feder 48 drückt die Schmelzapparatur 38 mit der Nachlaufrolle 46 auf die längslaufende Schweissnaht 16 eines Blechrohrs 10. Die Auftragsdüse 44 bzw. deren Ausflussöffnung hat einen stets gleichbleibenden Abstand von der Schweissnaht 16. Die geometrische Form der Blechrohre ist nie exakt zylindrisch, beim Schweissvorgang entstehen stets Deformationen, Krümmungen und dgl. Die angedrückte Nachlaufrolle 46 kann diesen Verformungen folgen, indem die ganze Schmelzapparatur 38 um die Aufhängung 40 schwenkt. Die Feder 48 vermag also die Schmelzapparatur 38 zu heben und anzudrücken. Der Abstand der Auftragsdüse 44 von der längslaufenden Schweissnaht bleibt damit wie erwähnt immer konstant.

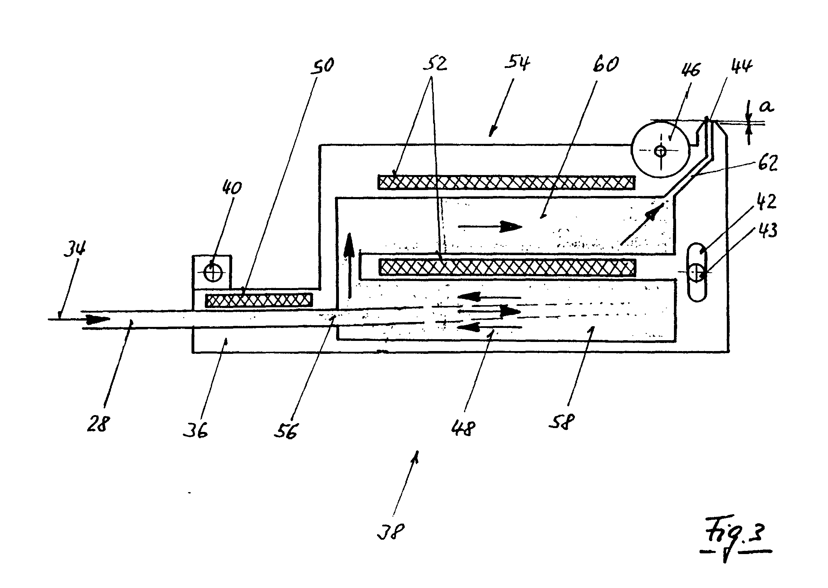

In Fig. 3 ist der Materialfluss 48 im Bereich der Schmelzapparatur 38 dargestellt und die eingesetzten Heizpatronen 50, 52 im Bereich der Vorheizzone 36 und einer Verflüssigungszone 54 dargestellt. Der Faden 28 aus einem thermoplastischen Kunststoff bzw. Hotmelt wird in Richtung des Pfeils durch die Vorheizzone 36 gestossen, wo er auf etwa 150°C erwärmt wird. Der vorgewärmte Faden tritt durch eine abgedichtete Oeffnung in einen Schmelzkanal 58 ein und wird durch zurückfliessendes, geschmolzenes Auftragsmaterial gestossen. Je weiter der Faden 28 in den Schmelzkanal hineingestossen wird, desto mehr erweicht er, wird pastös und schliesslich flüssig. Dies wird angedeutet, indem der Faden 28 vorerst mit längeren, dann mit kürzeren Strichen und schliesslich mit Punkten gezeichnet wird.

Durch den weiter nachgestossenen Faden 28 wird das geschmolzene Material entlang des eingeführten Fadens in einen hier obenliegenden Homogenisierungskanal 60 gestossen, wo eine homogene Verflüssigung des Auftragsmaterials stattfindet. Schliesslich gelangt das homogen verflüssigte Auftragsmaterial über einen Auftragskanal 62 zur Auftragsdüse 44, einer Breitschlitzdüse mit bezogen auf die Zufuhr von Auftragsmaterial, d.h. den Vorschub des Hotmelt-Fadens 28, grossen Ausflussöffnung, welche einen Druckaufbau in der Schmelzapparatur 38 verhindert. Diese Ausflussöffnung der Auftragsdüse 44 ist um den Abstand a weniger hoch angeordnet als die Nachlaufrolle 46.

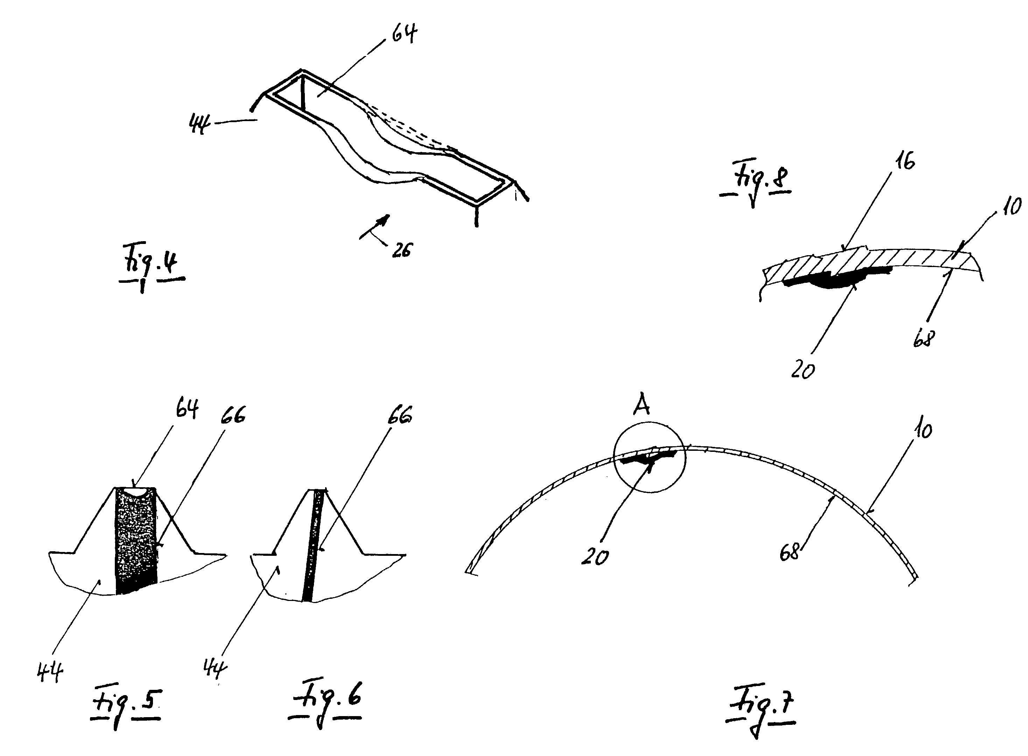

In Fig. 4 ist die Ausflussöffnung 64 einer Auftragsdüse 44, einer Breitschlitzdüse, dargestellt. Diese Ausflussöffnung 64 ist im wesentliche rechteckig. Die beiden gegenüberliegenden Längswände der Auftragsdüse 44 sind im mittleren Bereich vertieft ausgebildet, mit andern Worten ist das Material der sich in von der Ausflussöffnung 64 wegweisender Richtung verdickenden Seitenwände abgetragen. Dies hat zur Folge, dass beim Auftragen des Schutzfilms 20 (Fig. 2) im mittleren Bereich der Düse wesentlich mehr Beschichtungsmaterial ausfliesst. Im mittleren Bereich ist der Schutzfilm 20 dicker ausgebildet als in den beiden randständigen Bereichen. Die Aussparung in den längsseitigen Wänden der Düse kann im Prinzip von beliebiger Form sein. Die Verstärkung des Schutzfilms im mittleren Bereich ist umso grösser, je mehr Material der Seitenwände abgetragen wird.

Es kann auch nur die bezüglich der Vorschubrichtung 26 stromab liegende lange Seitenwand der Auftragsdüse 44 abgetragen werden. Die stromauf liegende lange Seitenwand der Auftragsdüse 44 bleibt in diesem Fall unverändert, was gestrichelt angedeutet ist.

In Fig. 5 ist der Bereich der Ausflussöffnung 64 einer Auftragsdüse 44 im Schnitt angedeutet. Die Schnittebene liegt in Längsrichtung der Ausflussöffnung 64. Der breite Materialfluss von verflüssigtem thermoplastischen Kunststoff in Richtung der Ausflussöffnung 64 verhindert, wie bereits erwähnt, einen Druckaufbau in der Schmelzapparatur (38 in Fig. 3) und erlaubt die Abdeckung der Schweissnaht auf der ganzen Breite.

Fig. 6 zeigt diese Auftragsdüse im Seitenschnitt, der Materialfluss 66 hat hier nur eine geringe Dicke, beispielsweise von 1 mm.

In Fig. 7, 8 ist ein Blechrohr 10 mit einer längslaufenden Schweissnaht 16 dargestellt, welche auf der Innenseite 68 mit einem Schutzfilm 20 abgedeckt ist.

Die längslaufende Verdickung des Schutzfilms 20 im mittleren Bereich, direkt auf der Schweissnaht 16, ist gut erkennbar, in beiden Seitenbereichen wird weniger Material aufgetragen.

## Patentansprüche

1. Verfahren zum Auftragen eines kontinuierlichen Schutzfilms (20) aus einem thermoplastischen Kunststoff auf die Innenseite (68) der Längsschweissnaht (16) von Blechrohren (10), welche stirnseitig aneinanderliegend über den Schweissarm (12) einer Schweissmaschine und einen anschliessenden Auftragsarm (18) zugeführt werden, wobei der thermoplastische Kunststoff kontinuierlich geschmolzen und mittels einer Auftragsdüse (44) wenigstens über die ganze Breite der Schweissnaht (16) aufgetragen wird,
**dadurch gekennzeichnet, dass**
der kontinuierlich zugeführte thermoplastische Kunststoff im Bereich des Auftragsarms (18) vorgewärmt, geschmolzen und unter homogener Verflüssigung zur Auftragsdüse (44) geleitet, deren Ausflussöffnung (64) mit einstellbarem, konstantem Abstand (a) der Innenseite der Längsschweissnaht (16) der Blechrohre (10) nachgeführt, und der flüssige Kunststoff dosiert aufgetragen wird.

2. Verfahren nach Anspruch 1, **dadurch gekennzeichnet, dass** ein 10 bis 150 µm, insbesondere 20 bis 50 µm, dicker Schutzfilm (20) aufgetragen wird, vorzugsweise in der Mitte, direkt auf der Schweissnaht 16, dicker als in den beiden Seitenbereichen.

3. Verfahren nach Anspruch 1 oder 2, **dadurch gekennzeichnet, dass** ein Schutzfilm (20) aus einem lebensmittelechten Hotmelt, insbesondere einem Polyester, für industrielle Zwecke auch aus einem Polyurethan, aufgetragen wird.

4. Verfahren nach einem der Ansprüche 1 bis 3, **dadurch gekennzeichnet, dass** der Kunststoff in Form eines Fadens (28), in Kerzen- oder Granulatform in den Auftragsarm (18) geführt, in der Vorheizzone auf etwa die halbe Schmelztemperatur, insbesondere 140 bis 160°C, erwärmt und durch eine abgedichtete Oeffnung (56) in den Schmelzkanal (58) der Verflüssigungszone (54) gestossen wird.

5. Verfahren nach Anspruch 4, **dadurch gekennzeichnet, dass** die Heizpatrone/n (50) der Vorheizzone (36) zeitverzögert, vorzugsweise etwa 10 min nach dem Einschalten der Heizpatronen (52) der Verflüssigungszone (54), eingeschaltet wird/werden.

6. Verfahren nach einem der Ansprüche 1 bis 5, **dadurch gekennzeichnet, dass** die Blechrohre (10) mit dem auf die Längsschweissnaht (16) aufgetragenen Schutzfilm (20) in-line durch eine Wärmezone geführt werden.

7. Vorrichtung zum Auftragen eines kontinuierlichen Schutzfilms (20) aus einem thermoplastischen Kunststoff auf die Innenseite (68) der Längsschweissnaht (16) von in Axialrichtung transportierten Blechrohren (10) gemäss dem Verfahren nach einem der Ansprüche 1 bis 6, an einer Schweissmaschine mit einem Schweissarm (12) und einem anschliessenden Auftragsarm (18), wobei die Vorrichtung Mittel zum Zuführen und Schmelzen des thermoplastischen Kunststoffs und eine sich wenigstens über die ganze Breite der Schweissnaht (16) erstreckende Auftragsdüse (44) umfasst,
**dadurch gekennzeichnet, dass**
eine Schmelzapparatur (38) Mittel zum Nachführen der Ausflussöffnung (64) der Auftragsdüse (44) in einem einstellbaren, regelmässigen Abstand (a) von der Innenseite der längslaufenden Schweissnaht (16) aufweist.

8. Vorrichtung nach Anspruch 7, **dadurch gekennzeichnet, dass** die Auftragsdüse (44) und die Mittel zum Nachführen, vorzugsweise auch die Heizung, auf einem einstellbar schwenkbaren Arm oder verschiebbaren Schlitten angeordnet sind, wobei eine Nachlaufrolle (46) auf der Längsschweissnaht (16) rollt oder ein Gleitschuh darauf gleitet, und dadurch die Auftragsdüse (44) im einstellbaren Abstand (a) geführt ist.

9. Vorrichtung nach Anspruch 8, **dadurch gekennzeichnet,**
**dass** der schwenkbare Arm oder Schlitten mit Federkraft (48) auf die Innenseite der Schweissnaht (16) gedrückt oder gezogen ist.

10. Vorrichtung nach Anspruch 7, **dadurch gekennzeichnet, dass** eine Sonde zur Einstellung des Abstandes zwischen der Auftragsdüse (44) und der Längsschweissnaht (16) angeordnet ist, welche ein Stellorgan auslöst.

11. Vorrichtung nach einem der Ansprüche 7 bis 10, **dadurch gekennzeichnet, dass** die Auftragsdüse (44) als Breitschlitzdüse ausgebildet ist, auch mit einer vergrösserten Ausflussöffnung (64) im längsmittigen Bereich.

## Claims

1. Process for application of a continuous protective film (20) of a thermoplastic material on the inside (68) of the longitudinal weld seam (16) of metal tubes (10) which, lying against each other at the ends, are guided over the welding arm (12) of a welding machine and an attached application arm (18), where the thermoplastic material is continuous melted and applied by means of an application nozzle (44) at least over the entire width of the weld seam (16),
**characterized in that**
the continuously supplied thermoplastic material is preheated in the area of the application arm (18), melted and, under homogeneous liquefaction, passed to the application nozzle (44), the outlet opening (64) of which is guided at an adjustable constant distance (a) from the inside of the longitudinal weld seam (16) of the metal tube (10), and the liquid plastic is applied in metered quantities.

2. Process according to claim 1, **characterized in that** a protective film (20) of thickness 10 to 150 µm, preferably 20 to 50 µm, is applied directly onto the weld seam 16, preferably thicker in the centre than in the two side areas.

3. Process according to claim 1 or 2, **characterized in that** a protective film (20) of a foodstuff-tolerant hotmelt, in particular a polyester, for industrial purposes also of a polyurethane, is applied.

4. Process according to any of claims 1 to 3, **characterized in that** the plastic is guided, in the form of a bead (28), in rod or granulate form to the application arm (18), heated in the preheating zone to around half the melting temperature, in particular 140 to 160°C, and pushed through a sealed opening (56) into the melt duct (58) of the liquefaction zone (54).

5. Process according to claim 4, **characterized in that** the heating cartridge(s) (50) of the preheating zone (36) is/are switched on after a time delay, preferably around 10 minutes after switching on the heating cartridge (52) of the liquefaction zone (54).

6. Process according to any of claims 1 to 5, **characterized in that** the metal tubes (10) with the protective film (20) applied to the longitudinal weld seam (16) are passed through an in-line heating zone.

7. Device for application of a continuous protective film (20) of a thermoplastic material on the inside (68) of the longitrudinal weld seam (16) of axially transported metal tubes (10) in accordance with a process according to any of claims 1 to 6, on a welding machine with a welding arm (12) and an attached application arm (18), where the device has means for supplying and melting the thermoplastic material, and an application nozzle (44) extending at least over the entire width of the weld seam (16),
**characterised in that**
a melting device (38) has means for guiding the outlet opening (64) of the application nozzle (44) at an adjustable regular distance (a) from the inside of the longitudinal weld seam (16).

8. Device according to claim 7, **characterized in that** the application nozzle (44) and the guiding means, preferably also the heating device, are arranged on an adjustable swivellable arm or displaceable slider where a tracking roller (46) rolls on the longitudinal weld seam (16) or a slider shoe slides on this, and hence the application nozzle (44) is guided at the adjustable distance (a).

9. Device according to claim 8, **characterized in that** the swivellable arm or slider is pressed or pulled by spring force (48) against the inside of the weld seam (16).

10. Device according to claim 7, **characterized in that** a sensor is provided for setting the distance between the application nozzle (44) and the longitudinal weld seam (16), which triggers an actuator.

11. Device according to any of claims 7 to 10, **characterized in that** the application nozzle (44) is formed as a wide slot nozzle, also with an enlarged outlet opening (64) in the longitudinal centre area.

## Revendications

1. Procédé pour appliquer un film protecteur (20) continu en une matière thermoplastique sur la face intérieure (68) du cordon de soudure longitudinal (16) de tuyaux en tôle (10) qui, disposés les uns contre les autres par leur côté frontal, passent par le bras de soudage (12) d'une machine à souder puis par un bras d'application (18), la matière thermoplastique étant fondue en continu et étant appliquée au moyen d'une buse d'application (44) au moins sur toute la largeur du cordon de soudure (16),
**caractérisé en ce que**
la matière thermoplastique amenée en continu est préchauffée dans la région du bras d'application (18), est fondue et, en étant fluidifiée de manière homogène, est guidée vers la buse d'application (44) dont l'orifice d'écoulement (64) suit la face intérieure du cordon de soudure longitudinal (16) des tuyaux en tôle (10) avec un écartement (a) constant et réglable, et la matière plastique fluide est appliquée de manière dosée.

2. Procédé selon la revendication 1, **caractérisé en ce qu'**on applique un film protecteur (20) d'une épaisseur de 10 à 150 µm, en particulier de 20 à 50 µm, directement sur le cordon de soudure (16), de préférence plus épais au milieu que dans les deux zones latérales.

3. Procédé selon la revendication 1 ou 2, **caractérisé en ce qu'**on applique un film protecteur (20) en une colle thermofusible (hotmelt) alimentaire, en particulier en un polyester, ou pour des applications industrielles en un polyuréthane.

4. Procédé selon l'une des revendications 1 à 3, **caractérisé en ce que** la matière plastique est guidée dans le bras d'application (18) sous la forme d'un fil (28), sous forme de bougie ou de granulés, est portée dans la zone de préchauffage à environ la moitié de la température de fusion, en particulier 140 à 160°C, et est poussée par une ouverture (56) étanche dans le canal de fusion (58) de la zone de fluidification (54).

5. Procédé selon la revendication 4, **caractérisé en ce que** la (les) cartouche(s) chauffante(s) (50) de la zone de préchauffage (36) sont mises en route avec un décalage dans le temps, de préférence d'environ 10 minutes, après la mise en route des cartouches chauffantes (52) de la zone de fluidification (54).

6. Procédé selon l'une des revendications 1 à 5, **caractérisé en ce que** les tuyaux en tôle (10), avec le film protecteur (20) appliqué sur le cordon de soudure longitudinal (16), sont guidés en ligne à travers une zone thermique.

7. Dispositif pour appliquer un film protecteur (20) continu en une matière thermoplastique sur la face intérieure (68) du cordon de soudure longitudinal (16) de tuyaux en tôle (10) transportés dans la direction axiale, suivant le procédé selon l'une des revendications 1 à 6, sur une machine à souder avec un bras de soudage (12) et un bras d'application (18) attaché, le dispositif comprenant des moyens pour amener et faire fondre la matière thermoplastique et une buse d'application (44) s'étendant au moins sur toute la largeur du cordon de soudure (16),
**caractérisé en ce que**
un appareillage de fusion (38) présente des moyens pour ajuster l'orifice d'écoulement (64) de la buse d'application (44) à un écartement (a) constant et réglable de la face intérieure du cordon de soudure longitudinal (16).

8. Dispositif selon la revendication 7, **caractérisé en ce que** la buse d'application (44) et les moyens d'ajustement, de préférence également le dispositif de chauffage, sont disposés sur un bras pivotant réglable ou sur un chariot mobile, un galet auto-orientable (46) ou un patin roulant sur le cordon de soudure longitudinal (16) et la buse d'application (44) étant ainsi guidée à un écartement (a) réglable.

9. Dispositif selon la revendication 8, **caractérisé en ce que** le bras pivotant ou le chariot est appliqué ou tiré par la force d'un ressort (48) sur la face intérieure du cordon de soudure (16).

10. Dispositif selon la revendication 7, **caractérisé en ce qu'**il est prévu une sonde pour régler l'écartement entre la buse d'application (44) et le cordon de soudure longitudinal (16), laquelle sonde déclenche un organe de réglage.

11. Dispositif selon l'une des revendications 7 à 10, **caractérisé en ce que** la buse d'application (44) est réalisée sous forme de buse plate, également avec un orifice d'écoulement (64) agrandi dans la zone médiane longitudinale.
